# EUROPÄISCHE PATENTSCHRIFT

(11) **EP 1 034 629 B1**
(45) Veröffentlichungstag und Bekanntmachung des Hinweises auf die Patenterteilung: **05.02.2003**
(21) Anmeldenummer: 98961073.8
(22) Anmeldetag: 06.11.1998
(51) Int. Cl.: H04B 10/17, H01S 3/30

(54) **VERFAHREN ZUR PEGELEINSTELLUNG FÜR OPTISCHE SIGNALE**
METHOD FOR ADJUSTING THE LEVEL OF OPTICAL SIGNALS
PROCEDE POUR AJUSTER LE NIVEAU DE SIGNAUX OPTIQUES

(30) Priorität: 28.11.1997 DE 19752983; 28.11.1997 DE 19752982
(43) Veröffentlichungstag der Anmeldung: 13.09.2000
(73) Patentinhaber: SIEMENS AKTIENGESELLSCHAFT, 80333 München (DE)
(72) Erfinder: GOTTWALD, Erich, D-83607 Holzkirchen (DE)
(86) Internationale Anmeldenummer: DE9803254
(87) Internationale Veröffentlichungsnummer: WO99029057

(56) Entgegenhaltungen:
- EP-A- 0 139 081
- EP-A- 0 734 105
- GB-A- 2 294 170
- JP-A- 58 085 588
- JP-A- 59 065 828

## Beschreibung

Optische Signale werden über Lichtwellenleiter übertragen. Zu ihrer Verstärkung werden häufig Faserverstärker verwendet. Diese verwenden entweder speziell dotierte Faserstücke oder nutzen nichtlineare Effekte auf normalen Übertragungsfasern aus, wie der in ntz, Band 43, (1990), Heft1, Seiten 8 bis 13 beschriebene Faser-Raman-Verstärker.

Bei vielen Übertragungseinrichtungen werden auch Dämpfungsglieder eingesetzt, mit denen erforderliche Pegelwerte, beispielsweise die Eingangspegel von Verstärkern, eingestellt werden, wie dies beispielsweise in IEEE PHOTONICS TECHNOLOGY LETTERS, Vol. 6.No.4, April 1994, Seiten 509 bis 512 beschrieben ist.

Moderne Übertragungssysteme mehrere Signale mit Hilfe des Wellenlängenmultiplexverfahrens, WDM, bei dem jeweils mehrere Übertragungskanäle zu einem Übertragungsband zusammengefaßt werden, das gemeinsam verstärkt wird. Durch den Ramaneffekt kommt es dabei zu einer Beeinflussung zwischen den Übertragungsbändern, bei der die Pegel der einzelnen Signale (Kanäle) unterschiedlich betroffen sind, die als Verkippung bezeichnet und bisher meist durch nichtlineare Verstärker und Filter kompensiert wurde. Die Grundlagen der stimulierten Ramanstreuung, sind in Nonlinear Fiber Optics, Second Edition, Govind P. Agrawal, Academic Press, Chapter 8, beschrieben.

In der Europäischen Patentanmeldung EP 0 139 081 A2 ist ein optisches Kommunikationssystem beschrieben, bei das übertragene optische Signal aufgrund des stimulierten Raman Effekts durch mehrere Pumpsignale mit unterschiedlichen Wellenlängen verstärkt wird. Die unterschiedlichen Pumpsignale werden so gewählt, daß die Verstärkungskurve bzw. die Signalpegel möglichst ideal verlaufen.

Aus der Europäischen Patentanmeldung EP 0 734 105 A2 ist ein Faserverstärker bekannt, der mittels eines Pumpsignals und eines Spiegels zur Kompensation der Dispersion verwendet wird. Figur 47 zeigt die Verkippung der Signalpegel (sloop gain) in Abhängigkeit von der Pumpleistung.

In GB 2 294 170 A ist eine Anordnung zur Verstärkung beschrieben, die die Anzahl der aktiven Kanäle überwacht und auch bei Ausfall einzelner Kanäle den Pegel auf einen vorgewähltem Wert hält.

Im Patent Abstract of Japan publication number 59065828/application number 57176312 ist ein Verstärker für ein kontinuierliches optisches Signal (constant wave) beschrieben. Das Licht einer kurzwelligeren Signalquelle 11 wird mit Hilfe der auf die Stokes-Wellenlängen abgestimmten Hilfslichtquellen 13 bis 20 aufgrund des Stimulierten Raman Effekts auf die Wellenlänge der langwelligsten Hilfslichtquelle umgesetzt.

Eine zufriedenstellende Einstellung oder Kompensation der Verkippung, insbesondere bei WDM-Systemem mit mehreren Übertragungsbändern, ist keiner dieser Literaturstellen zu entnehmen.

Insbesondere bei WDM-Systemen, bei denen mehrere Gruppen von Signalen übertragen werden , bewirkt die stimulierte Ramanstreung, SRS, daß die in "langwelligen" Kanälen übertragenen Signale auf Kosten der in "kurzwelligen" Kanälen übertragenen Signale verstärkt werden; anders ausgedrückt, den kurzwelligen "blauen" Kanälen wird Energie entzogen, sie werden mit abnehmender Wellenlänge (zunehmender Frequenz) stärker gedämpft, während dies den langwelligeren "roten" Kanälen zugute kommt. Je größer die Wellenlängen, desto mehr profitieren die entsprechenden Übertragungskanäle. Entsprechendes gilt für die Spektralanteile von Signalen mit hohen Bitraten.

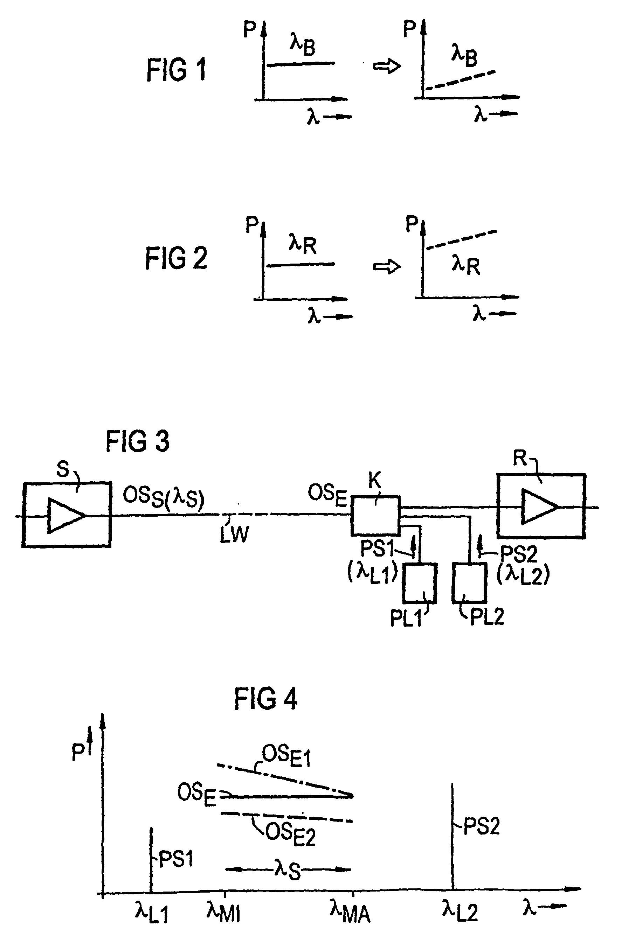

In den Figuren 1 und 2 ist die Auswirkung des SRS-Effekts dargestellt. Das linke Diagramm zeigt einen von der Wellenlänge unabhängigen konstanten Empfangspegel des blauen Übertragungsbandes (Wellenlängenbereichs) λ_{B}. Im rechten Diagramm ist der Empfangspegel dargestellt, wenn gleichzeitig ein weiterer "roter" Wellenlängenbereich zur optischen Signalübertragung genutzt wird. Je kleiner die Wellenlänge des blauen Übertragungsbandes, desto stärker ist die Dämpfung.

In Figur 2 sind die Pegelverhältnisse für das "rote" Übertragungsband λ_{R} dargestellt. Das linke Diagramm zeigt wieder den linearen Pegelverlauf für den Fall, daß nur in diesem Übertragungsband Signale übertragen werden. Erfolgt zusätzlich eine Übertragung im "blauen" Wellenlängenbereich, wird der Pegel mit zunehmender Wellenlänge mehr angehoben. Dies hängt nur wenig davon ab, ob die Signale in den Übertragungsbändern in gleicher oder entgegengesetzter Richtung übertragen werden (co-propagating waves - counter-propagating waves). Die in den rechten Diagrammen der Figuren 1 und 2 dargestellte Änderung der Pegel in Abhängigkeit von der Wellenlänge, die einem Schwenken um einen gemeinsamen Drehpunkt entspricht, wird als Verkippung bezeichnet.

In den heute typischen Übertragungssystemen mit zwei mal acht Kanälen treten durch den beschriebenen Effekt Zusatzdämpfungen bzw. Verstärkungen in einem Übertragunsabschnitt (ca. 40-80km) zwischen 0,4 bis 0,7 dB auf. Bei Übertragungsstrecken mit bis zu 10 oder mehr Übertragungsabschnitten und entsprechend vielen Zwischenverstärkern summieren sich diese Pegeländerung entsprechend auf. Fällt eines der Übertragungsbänder aus, so ändert sich der Signalpegel auch im intakten Übertragungsband sehr schnell. Die automatische Verstärkungsregelung auf der Empfangsseite kann üblicherweise diese Pegelschwankungen nicht schnell genug ausgleichen, so daß Fehlerbursts im Millisekundenbereich die Folgen sind. In diesem Fall ist eine schnelle Wiederherstellung des bisherigen Pegels erforderlich.
Für viele Anwendungszwecke sollen der Pegel und die Verkippung von Signalbändern häufig unabhängig voneinander einstellbar sein.

Aufgabe der Erfindung ist es daher, ein Verfahren und eine Anordnung zur Einstellung der Verkippung für breitbandige optische Signale anzugeben. Das Verfahren soll ferner auch zur gleichzeitigen Pegeleinstellung verwendet werden.

Eine weitere Aufgabe besteht daher darin, das Verfahren zur raschen Stabilisierung der Verkippung und des Signalpegels eines intakten Übertragungsbandes bei Ausfall eines anderen Übertragungsbandes auszubilden und eine geeignete Anordnung anzugeben.

Ein die Hauptaufgabe lösendes Verfahren ist im Patentanspruch 1 angegeben. In dem unabhängigen Patentanspruch 4 wird eine Lösung bei der Übertragung von mehreren Signalbändern angegeben. Die unabhängigen Anordnungsansprüche 15 und 16 beschreiben jeweils eine geeignete Anordnung.

Vorteilhafte Weiterbildungen der Erfindung sind in den abhängigen Ansprüchen angegeben.

Der Vorteil des erfindungsgemäßen Verfahren ist es, daß bei Verwendung von zwei Pumpsignalen die Verkippung und der Signalpegel weitgehend unabhängig voneinander einstellbar sind. Durch das Verfahren kann das Signal, beispielsweise ein Wellenlängenmultiplexsignal, sowohl verstärkt als auch abgeschwächt werden. Außerdem kann die Verkippung in größeren Bereichen geändert werden, so daß eine gewünschte Entzerrung des Signals erfolgt. Durch Pumplaser werden Pumpsignale mit Wellenlängen oberhalb und/oder unterhalb des Übertragungsbandes eingespeist. Diese Pumpsignale entziehen dem Signal entweder Energie oder führen ihm Energie zu. Durch Veränderung der Pumpenergie wird das Signal also verstärkt oder gedämpft, wobei gleichzeitig eine Verkippung auftritt.

Durch die geeignete Wahl der Pumplaser-Wellenlängen können Gewinn/Dämpfung und Verkippung in weiteren Bereichen gesteuert werden. Auch kann bereits eine durch ein geeignetes Pumpsignal mit größerer Wellenlänge die erforderliche Verkippung erzielt werden.

Es ist vorteilhaft, wenn die Pumpenergie am empfangsseitigen Ende eingespeist wird, da dies zu seinem günstigeren Rauschverhältnis führt. Die Verkippung ist abhängig vom Abstand der Wellenlänge des Pumplasers zur (mittleren) Wellenlänge des Signals. Die Anordnung kann vorzugsweise auch nur als Dämpfungsglied ausgeführt werden. Durch die Wahl der Pumpwellenlänge kann der Grad der Verkippung in Abhängigkeit von der Dämpfung bestimmt werden. Ein solches "optisches Dämpfungsglied" kann auch zur Pegelregelung des empfangsseitigen optischen Signals verwendet werden. Bei einem besonders einfachen auf den jeweiligen Anwendungsfall zugeschnittenen Dämpfungsglied wird nur ein Laser verwendet, wodurch eine gewünschte Abhängigkeit zwischen Dämpfung und Verkippung hergestellt wird.

Beim Ausfall eines Übertragungsbandes bleibt der Pegel in dem ungestörten Übertragungsband dann nahezu konstant, wenn der Pumplaser entweder als Energielieferant oder als Energieabsorber eingesetzt wird, der die Wirkung des ausgefallenen Übertragungsbandes kompensiert. Da die zur Kompensation des ausgefallenen Übertragungsbandes benötigte Leistungsänderung des Pumplasers bekannt ist, wird seine entsprechende Leistung sehr schnell geändert, damit möglichst wenig Übertragungsfehler auftreten. Eine exakte Nachregelung ist im allgemeinen nicht erforderlich, kann jedoch zusätzlich vorgesehen werden.

Im allgemeinen ergibt sich ein günstigeres Signal-Geräusch-Verhältnis, wenn der Pumplaser auf der Empfangsseite eingesetzt wird. Hier kann die Steuerung gegebenenfalls auch in den Empfangsverstärker eingreifen, um durch Steuerung seines Übertragungsverhaltens einen optimalen Pegelverlauf zu erreichen.

Um gleichzeitig mit dem Pegel die Verkippung des ungestörten Übertragungsbandes auszugleichen, ist es vorteilhaft, wenn die Frequenz eines im ungestörten Betriebsfall abgeschalteten Pumplasers etwa der Mittenfrequenz des ausgefallenen Übertragungsbandes entspricht.

Für optimale Kompensation des ausgefallenen Übertragungsbandes ist es zweckmäßig, mehrere Pumplaser mit unterschiedlichen Wellenlängen unterhalb und/oder oberhalb der Übertragungsbänder zu verwenden. Eine optimale Kompensation ist bereits mit zwei Pumpsignalen mit unterschiedlichen Wellenlängen möglich. Günstig - jedoch oft nicht zu realisieren - ist auch die Verwendung eines Pumplasers, dessen Frequenz zwischen beiden Wellenlängenbereichen liegt, da die Übertragungsbänder dann im gleichen Maß bezüglich Dämpfung bzw. Verstärkung behandelt werden.

Ausführungsbeispiele der Erfindung werden anhand von Figuren näher erläutert.

Es zeigen:
- Figur 3: ein Prinzipschaltbild zur Pegeleinstellung einesoptischen Signals,
- Figur 4: den Pegelverlauf eines optischen Signals in Abhängigkeit von zwei Pumpsignalen und
- Figur 5: eine Einrichtung zur Pegelregelung.
- Figur 6: einen mit einem Pumplaser versehenen Übertragungsabschnitt,
- Figur 7: einen Übertragungsabschnitt mit empfangsseitig eingefügtem Pumplaser,
- Figur 8: einen Übertragungsabschnitt mit einem sendeseitig und einem empfangsseitig eingefügten Pumplaser,
- Figur 9: einen Übertragungsabschnitt mit zwei empfangsseitig eingefügten Pumplasern in einem bevorzugtem Ausführungsbeispiel und
- Figur 10: zwei empfangsseitig eingefügte Pumplaser für bidirektionalen Betrieb.

Figur 3 zeigt einen Übertragungsabschnitt mit einer Sendeeinrichtung S, beispielsweise einem Laser oder einem Verstärker, der ein optisches Signal OSₛ mit einem größeren Wellenlängenbereich λₛ in einen Lichtwellenleiter LW einspeist, und eine Empfangseinrichtung R, die ebenfalls einen Verstärker aufweist. Bei dem optischen Signal kann es sich beispielsweise um ein digitales Multiplexsignal mit einer größeren Bandbreite oder um ein Wellenängen-Multiplexsignal handeln. Das durch die Übertragungsstrecke gedämpfte optische Signal (Empfangssignal) OS_{E} wird der Empfangseinrichtung R zugeführt.

Empfangsseitig sind zwei Pumplaser PL1 und PL2 angeordnet, die ein Pumpsignal PS1 mit einer Wellenlänge λ_{L1}, die unterhalb der kleinsten Wellenlänge λ_{MI} des optischen Signals liegt, und ein Pumpsignal PS2 mit einer Wellenlänge λ_{L2}, die oberhalb der größten Wellenlänge λ_{MA} des optischen Signals liegt (Figur 2), über einen Koppler K in den Lichtwellenleiter einspeist. Das Pumpsignal PS2 schwächt das optische Signal OS_{E} ab. Je höher die Leistung des Pumpsignals, desto schwächer wird das optische Signal. Diese Schwächung nimmt mit der Differenz der Wellenlänge des optischen Signals zur Wellenlänge des Pumplasers zu. Das Pumpsignal PS1 erhöht den Signalpegel wieder, die Verkippung erfolgt aber in derselben Drehrichtung. Da aber der Abstand zum Frequenzband λₛ bzw. dessen mittlerer bzw. kleinster Wellenlänge λ_{MI} ungleich dem Abstand der Wellenlänge λ_{R} des zweiten Pumpsignals ist, ergibt sich ein anderer Bezug zwischen Verstärkung und Verkippung. So können unterschiedliche Verkippungen bei einstellbaren Dämpfungs- oder Verstärkungswerten realisiert werden.

Soll ein von der Wellenlänge abhängiges "Dämpfungsglied" realisiert werden, so muß die Wirkung des Pumplasers mit "roter" Wellenlänge (größer als die maximale Wellenlänge λ_{MA}) überwiegen. Soll dagegen ein Verstärker realisiert werden, so muß die Wirkung des "blauen" Pumplasers mit "blauer" Wellenlänge (kleiner als die minimale Wellenlänge λ_{MI}) überwiegen.

Bei einer vereinfachten Ausführungsform eines "Dämpfungsgliedes", bei der jedoch eine unabhängige Einstellung von Verkippung und Pegel nicht mehr möglich ist, wird nur ein "roter" Pumplaser verwendet.

Darüber hinaus können Verstärker auch mit mindestens zwei "blauen" Pumplasern realisiert werden, die unterschiedliche Verkippungen bei gleichen Verstärkungen ermöglichen. Ebenso können Dämpfungsglieder mit mindestens zwei "roten" Pumplasern realisiert werden, die unterschiedliche Verkippungen bei gleichen Dämpfungswerten ermöglichen.

In Figur 4 zeigt die Wirkung zweier Pumplaser. Der obere über gestrichelt aufgezeichnete Pegelverlauf (P - Pegel, λ - Wellenlänge) des optischen Empfangssignals OS_{E1} weist zunächst bei kleinen Wellenlängen einen größeren und bei großen Wellenlängen einen kleinen Pegel auf. Dieser Verlauf, der den auf der Übertragungsstrecke wirksamen Raman-Effekt überkompensiert, wird durch sendeseitige oder empfangsseitige Filter oder Verstärker erzielt.

Sobald aber der Pumplaser PL2 eingeschaltet wird, kommt es zur Abschwächung des empfangenen Signals OS_{E2}, wobei die kurzwelligeren (höherfrequenten) Signale stärker abgeschwächt werden. Wird der Pumplaser PL1 aktiv, so wird der Pegel wieder angehoben, die Verkippung des Empfangssignals OS_{E} verstärkt sich jedoch nochmals und es wird ein linearer Pegelverlauf erzielt.

Da die Abstände der Wellenlängen der Pumplaser zum Empfangssignal unterschiedlich sind, können Verkippung und Pegel in bestimmten Bereichen unabhängig voneinander eingestellt werden. Wenn die Wellenlängen beider Pumplaser größer als die maximale Wellenlänge des Empfangssignals sind, kann die Dämpfung in einem größeren Bereich und unabhängig von der Verkippung eingestellt werden. Entsprechendes gilt für blaue Pumplaser.

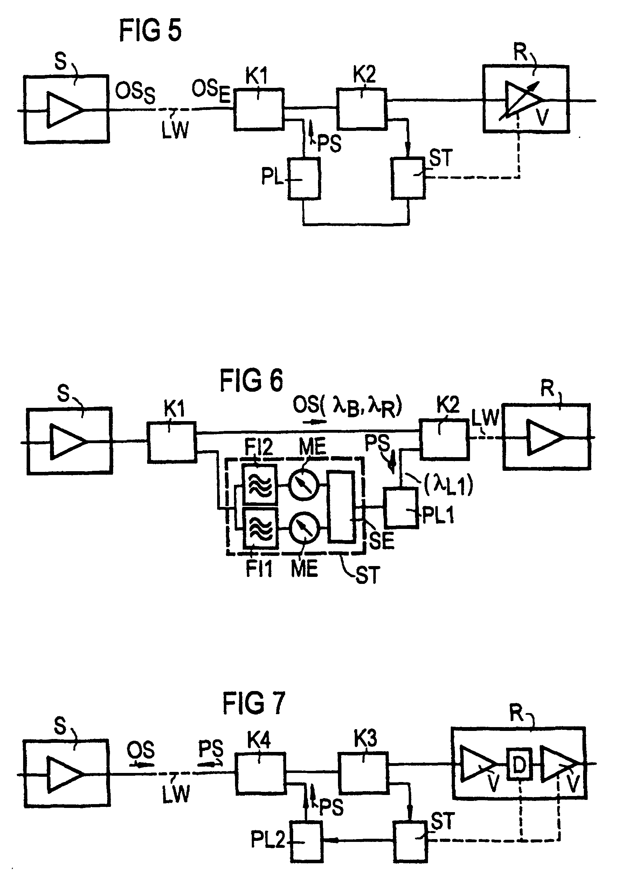

In Figur 5 zeigt einen Pumplaser PL als Teil einer empfansseitig angeordneten Regelschaltung. Ein Teil des optischen Empfangssignals OS_{E} wird als Meßsignal über einen Meßkoppler K2 ausgekoppelt und einer Steuerung ST zugeführt, die die Amplitude des optischen Empfangssignals durch Steuerung des Pumplasers, der sein Pumpsignal über einen Koppler K1 (als Koppler wird hier jede Einrichtung verstanden, die das Einspeisen eines Signals ermöglicht) in den Lichtwellenleiter einspeist, konstant hält. Die Steuerung kann zusätzlich in den Empfangsteil eingreifen und nach einem vorgegebenen Schema den Pumplaser und die Verstärkung bzw. Gewinnverkippung steuern. Anstelle einer Steuerung kann auch eine Regelschaltung oder die Kombination einer Steuerung und einer Regelung eingesetzt werden.

Figur 6 zeigt einen Streckenabschnitt mit einer Sendeeinrichtung S, beispielsweise einem sendeseitigen Verstärker, der ein optisches Signal OS in einen Lichtwellenleiter LW einspeist, einen Lichtwellenleiter LW und eine Empfangseinrichtung R. Das optische Signal besteht aus beispielsweise zweimal acht Kanälen, die in einem blauen Übertragungsband λ_{B} (1535 bis 1547 nm) und einem roten Übertragungsband λ_{R} (1550 bis 1562 nm) ausgesendet werden. Auf der Sendeseite - oder auch am Anfang eines beliebigen Streckenabschnitts zwischen den dargestellten Verstärkern - ist ein erster Pumplaser PL1 vorgesehen, der ein Pumpsignal PS mit konstanter Wellenlänge λ_{L1} über einen optischen Koppler K2 (als Koppler wird stets jede Einrichtung verstanden, die das Einspeisen eines Signals ermöglicht) in die Faser des Lichtwellenleiters LW schickt. Dies kann sowohl ein langwelliger "roter" Pumplaser sein, dessen Wellenlänge oberhalb der Wellenlänge des "roten" Übertragungsbandes bei ca. 1600 (bis ca.1630 nm) liegt, als auch ein kurzwelliger "blauer" Pumplaser mit einer Wellenlänge bei 1480 nm (bis ca.1440 nm).

Die Pumplaser können (zusammen mit geeigneten Filtern oder Verstärkern) sowohl im ungestörten Betrieb zur Kompensation des Ramaneffektes oder sonstiger Nichtlinearitäten als auch bei Ausfall eines Übertragungsbandes zur Kompensation der durch den Ramaneffekt hervorgerufenen Pegeländerung verwendet werden.

Geht man davon aus, daß bei ungestörtem Betrieb der Pumplaser aktiv ist, so ist (in der Regel) seine Leistung geringer als die Signalleistung. Wird ein langwelliger Pumplaser verwendet und fällt das rote Band aus, so muß die Pumpleistung erhöht werden, um dem blauen Übertragungsband mehr Energie zu entziehen. Fällt dagegen das blaue Band aus, so muß die Leistung des Pumplasers erniedrigt werden, damit dem "roten" Übertragungsband weniger Energie entzogen wird.

Bei einem kurzwelligen "blauen" Pumplaser liegen die Verhältnisse genau umgekehrt. Fällt das rote Band aus, so muß die Leistung erniedrigt werden, da dem blauen Übertragungsband bereits weniger Energie entzogen wird. Fällt dagegen das blaue Übertragungsband aus, so muß die Leistung des Pumplasers erhöht werden, um dem roten Übertragungsband die gleiche Energie wie bisher zuzuführen.

Eine geeignete Steuerung ST muß, um den Ausfall des Übertragungsbandes oder auch einzelner Kanäle festzustellen, zunächst die Signalpegel beider Übertragungsbänder separat messen. Hierzu werden die übertragenen Signale über einen Meßkoppler K1 und geeignete optische Filter FI1, FI2 Meßeinrichtungen ME zugeführt. Die Werte der gemessenen Signalpegel, beispielsweise der Summenpegel, werden einer Steuereinrichtung SE zugeführt, die die Leistung des Pumposzillators entsprechend der Änderung nachsteuert.

Der Pumplaser, der erst im Störungsfall Pumpleistung einkoppelt, kann auch auf der mittleren Frequenz des ausgefallenen Übertragungsbandes arbeiten, um eine optimale Kompensation zu ermöglichen.

Der Pumplaser kann bei Verwendung einer geeigneten Meßeinrichtung auch zur Korrektur von Pegel und Verkippung eines beliebigen Signals verwendet werden.

In Figur 7 ist auf der Empfangsseite ein Pumplaser PL2 mit zugehörigem Koppler K3 und eine Steuerung ST mit zugehörigem Koppler K4 angeordnet. Die empfangsseitige Anordnung ist wegen des günstigeren Rauschverhalten vorzuziehen. Die Steuerung ST kann außerdem in Verstärkerstufen V und ein Dämpfungsglied D des Empfangsteils R eingreifen und die gesamte Verstärkung/Dämpfung sowie die Verkippung optimieren.

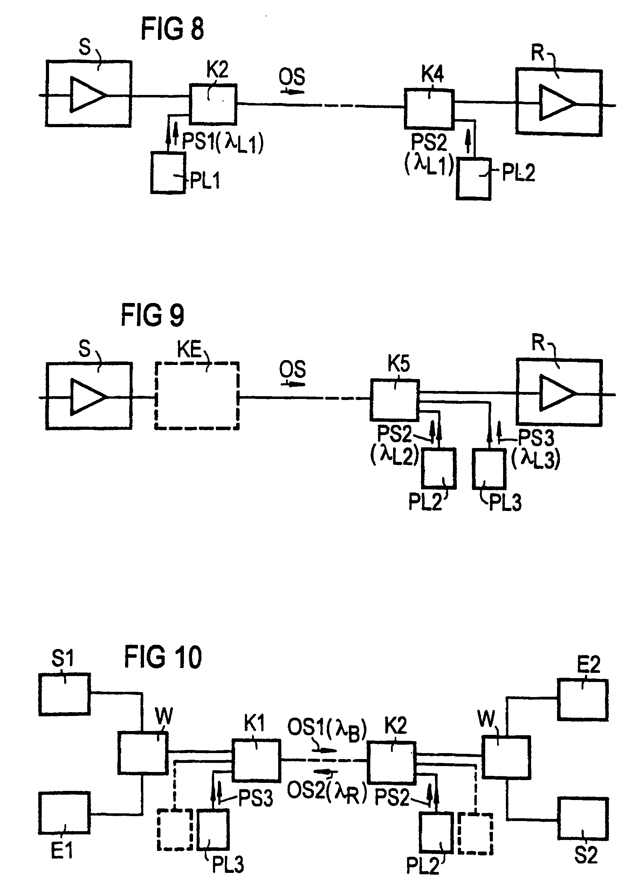

In Figur 8 ist ein Streckenabschnitt dargestellt, in den sendeseitig - dies kann ein beliebiger Punkt zwischen Sendeeinrichtung S und Empfangseinrichtung R sein - ein erster Pumplaser PL1 und empfangsseitig ein zweiter Pumplaser PL2 Pumpsignale mit der gleichen Wellenlänge λ_{L1} über Koppler K2 bzw. K3 einspeisen. Hierdurch können schwächere Pumplaser verwendet werden. Durch den sendeseitigen Laser erfolgt auch eine schnellere Reaktion auf das ausgefallenes Signal/Übertragungsband. Ebenso können Pumplaser mit unterschiedlichen Wellenlängen verwendet werden, um eine bessere Kompensation für das ausgefallene Signal zu erhalten.

In dieser und in den weiteren Figuren wird auf die Darstellung von Einzelheiten wie der Steuerung und der Messkoppler verzichtet.

In Figur 9 erfolgt die Einspeisung von Pumpsignalen PS2, PS3 mit verschiedenen Wellenlängen λ_{L2}, λ_{L3} durch zwei empfangsseitig angeordneten Pumplaser PL2, PL3 über einen entsprechenden Koppler K5. Hierdurch können die Leistungen der Laser kleiner sein können. Durch eine Kombination eines geeigneten roten und eines blauen Pumplasers kann sowohl die Verkippung als auch die Pegeländerung optimal korrigiert werden. Prinzipiell kann eine bessere Kompensation auch durch zwei rote oder zwei blaue Pumplaser mit unterschiedlichen Pumpfrequenzen erreicht werden.

Pumpsignale mit den entsprechenden Wellenlängen können zusätzlich sendeseitig in einer entsprechechenden Kompensationseinheit KE eingespeist werden. Dann ist es beispielsweise auch möglich, die sendeseitige Kompensationseinheit mit einer Steuerung und die emmpfangsseitigen Pumplaser mit einer Regelung auszustatten.

Natürlich können prinzipiell auch mehr als zwei Pumplaser verwendet werden. Ebenso kann das Verfahren auch bei mehr als zwei Übertragungsbändern angewendet werden.

Figur 10 zeigt einen Übertragungsabschnitt für bidirektionalen Betrieb. Die Signale für unterschiedliche Übertragungsrichtungen werden durch Weichen W getrennt. Zwei Pumplaser PL2 und PL3 (oder auch jeweils zwei) speisen an beiden Enden des Übertragungsabschnittes Pumpsignale PS2 und PS3 ein, um für jedes empfangene Signal - auch bei Ausfall eines Signals - eine optimale Kompensation zu erzielen.

## Patentansprüche

1. Verfahren zur Einstellung der Verkippung eines über einen Lichtwellenleiter übertragenen breitbandigen optischen Signals (OS_{E}) durch Einspeisen von mindestens einem Pumpsignal in den Lichtwellenleiter,
**dadurch gekennzeichnet,**
**daß** ein Pumpsignal (PS2) eingespeist wird, dessen Wellenlänge (λ_{L2}) größer als die maximale Wellenlänge (λ_{MA}) des optischen Signals (OS_{E}) ist und dessen Wellenlänge und Pegel so gewählt ist, daß das optische Signal (OS_{E}) die gewünschte Verkippung bei einer vorgegebenen Pegeländerung aufweist.

2. Verfahren nach Anspruch 1,
**dadurch gekennzeichnet,**
**daß** mindestens ein weiteres Pumpsignal (PS3) eingespeist wird, dessen Wellenlänge (λ_{L3}) ebenfalls größer als die maximale Wellenlänge (λ_{MA}) des optischen Signals (OS_{E}) ist.

3. Verfahren zur Einstellung der Verkippung nach Anspruch 1,
**dadurch gekennzeichnet,**
**daß** ein weiteres Pumpsignal (PS1) mit einer Wellenlänge (λ_{L1}) kleiner als die minimale Wellenlänge (λ_{MI}) des optischen Signals (OS_{E}) eingespeist wird, und die mindestens zwei Pumpsignale jeweils einen anderen Wellenlängenabstand zur mittleren Wellenlänge des optischen Signals (OS_{E}) aufweisen, und daß
die Wellenlängen und Pegel der Pumpsignale (PS1, PS2) so gewählt sind, daß das optische Signal (OS_{E}) die gewünschte Verkippung aufweist.

4. Verfahren zur Einstellung der Verkippung bei der optischen Signalübertragung über einen Lichtwellenleiter (LW), bei dem mehrere Pumpsignale (PS1, PS2) in den Lichtwellenleiter (LW) eingespeist werden,
**dadurch gekennzeichnet,**
**daß** mehrere Übertragungsbänder (λ_{B}, λ_{R}) über den Lichtwellenleiter übertragen werden,
**daß** die Signalpegel der Übertragungsbänder (λ_{B}, λ_{R}) gemessen werden und
**daß** bei einer Änderung, insbesondere bei Ausfall, des Signalpegels mindestens eines der Übertragungsbänder (λ_{B}, λ_{R}) mindestens ein Pumpsignal (PS1) in den Lichtwellenleiter (LW) eingespeist und sein Pegel so eingestellt wird, daß die Verkippung des mindesten einen ungestörten Übertragungsbandes (λ_{R}) empfangsseitig zumindest nahezu konstant bleibt.

5. Verfahren nach Anspruch 4,
**dadurch gekennzeichnet,**
**daß** mindestens ein weiteres Pumpsignal (PS2, PS3) mit einer unterschiedlichen Pumpwellenlänge (λ_{L2}, λ_{L3}) eingespeist wird.

6. Verfahren nach Anspruch 5,
**dadurch gekennzeichnet,**
**daß** ein erstes Pumpsignal (PS1) mit einer Wellenlänge (λ_{B}) kleiner als die minimale Wellenlänge (λ_{MI}) der Übertragungsbändern (λ_{B}, λ_{R}) eingespeist wird
und **daß** ein zweites Pumpsignal(PS2) mit einer Wellenlänge (λ_{R}) größer als die maximale Wellenlänge (λ_{MA}) der Übertragungsbänder (λ_{B}, λ_{R}) eingespeist wird.

7. Verfahren nach Anspruch 4,
**dadurch gekennzeichnet,**
**daß** die Pumpwellenlänge (λ_{L1}, λ_{L2}) eines zur Kompensation eines ausgefallenen Übertragungsbandes verwendeten Pumplasers (PL1, PL2) etwa dessen mittlerer Wellenlänge entspricht.

8. Verfahren nach einem der vorhergehenden Ansprüche 4 bis 7,
**dadurch gekennzeichnet,**
**daß** bei Ausfall eines Übertragungsbandes (λ_{B}, λ_{R}) die Pegel der Pumpsignale (PS1, PS2, PS3) aufgrund bekannter notwendiger Leistungsänderungen sehr schnell eingestellt werden und daß gegebenenfalls eine Nachregelung der Verkippung und des Signalpegels erfolgt.

9. Verfahren nach einem der Ansprüche 4 bis 8,
**dadurch gekennzeichnet,**
**daß** jeweils die Wellenlänge (λ_{L1}, λ_{L2}, λ_{L3}) und der Pegel des Pumpsignals (PS) oder der Pumpsignale (PS1, PS2, PS3) so gewählt oder eingestellt wird, daß die gewünschte Verkippung bei einem gewünschten Pegel zumindest annähernd auftritt.

10. Verfahren nach einem der vorhergehenden Ansprüche,
**dadurch gekennzeichnet,**
**daß** im ungestörten Betriebsfall die empfangsseitige Verkippung des empfangenen optischen Signals (OS_{E}) oder der Übertragungsbänder (λ_{B}, λ_{R}) durch Regelung der Pumpsignale (PS1, PS2, PS3) minimiert wird.

11. Verfahren nach einem der Ansprüche 3 - 9,
**dadurch gekennzeichnet,**
**daß** der Pegel des empfangenen optischen Signals (OS_{E}) oder des Übertragungsbandes (λ_{B}, λ_{R}) durch individuelle Regelung der Pumpsignale (PS1, PS2) konstant gehalten wird.

12. Verfahren nach Anspruch 1 bis 11,
**dadurch gekennzeichnet,**
**daß** die Pumpsignale (PS1, PS2) am empfangsseitigen Ende eines Übertragungsabschnitts (S, LW, R) eingespeist werden.

13. Verfahren nach Anspruch 3 bis 12,
**dadurch gekennzeichnet,**
**daß** mindestens jeweils ein Pumpsignal (PS1, PS2) sendeseitig und empfangsseitig eingespeist wird.

14. Verfahren nach Anspruch 5 bis 11,
**dadurch gekennzeichnet,**
**daß** bei bidirektionaler Übertragung Pumpsignale (PS1, PS2) an beiden Enden eines Übertragungsabschnittes (S, LW, R) eingespeist werden.

15. Anordnung zum Einstellen der Verkippung und des Pegels eines über einen Lichtwellenleiter (LW) übertragenen breitbandigen optischen Signals (OS_{E}) mit mindestens zwei Pumplasern (PL1, Pl2), die Pumpsignale (PS1, PS2) in den Lichtwellenleiter (LW) einspeisen,
**dadurch gekennzeichnet,**
**daß** ein erstes Pumpsignal (PS1) mit einer Wellenlänge (λ_{L1}) kleiner als die minimale Wellenlänge (λ_{MI}) des optischen Signals (OS) eingespeist wird,
**daß** ein zweites Pumpsignal (PS2) mit einer Wellenlänge (λ_{L2}) größer als die maximale Wellenlänge (λ_{MA}) des optischen Signals (OS) eingespeist wird, das einen anderen Wellenlängenabstand zur mittleren Wellenlänge des optischen Signals (OS) als das erste Pumpsignal (PS1) aufweist und
**daß** die Wellenlängen und Pegel der Pumpsignale (PS1, PS2) so gewählt sind, daß das optische Signal (OS_{E}, λ_{B}, λ_{R}) zumindest annähernd die gewünschte Verkippung und den gewünschten Pegel aufweist.

16. Anordnung zum Einstellen der Verkippung und des Pegels bei der optischen Signalübertragung über einen Lichtwellenleiter (LW) mit mindestens zwei Pumplasern (PL1, Pl2), die Pumpsignale (PS1, PS2) in den Lichtwellenleiter (LW) einspeisen,
**dadurch gekennzeichnet,**
**daß** eine Steuerung (ST) vorgesehen ist, die die Signalpegel von mindestens zwei Übertragungsbändern (λ_{B}, λ_{R}) misst und bei einer Änderung des Signalpegels, insbesondere eines Ausfalls, mindestens eines Übertragungsbandes (λ_{B}) die Leistung der Pumpsignale (PS1, PS2) so einstellt, daß die Verkippung in dem mindestens einen ungestörten Übertragungsband (λ_{R}) empfangsseitig etwa konstant bleibt.

17. Anordnung nach Anspruch 16,
**dadurch gekennzeichnet,**
**daß** Pumplaser (PL1, PL2) vorgesehen sind, bei denen die Wellenlängen ihrer Pumpsignale (PS1, PS2) so gewählt sind und deren Leistungen so eingestellt werden, daß das ungestörte Übertragungsband (λ_{R}) zumindest annähernd die gewünschte Verkippung und den gewünschten Pegel aufweist.

18. Anordnung nach Anspruch 16 oder 17,
**dadurch gekennzeichnet,**
**daß** eine Steuerung (ST) vorgesehen ist, die bei Ausfall eines Übertragungsbandes (λ_{B}) die Leistung der Pumplaser (PL1, PL2, PL3) aufgrund bekannter notwendiger Leistungsänderungen sehr schnell einstellt.

19. Anordnung nach Anspruch 18,
**dadurch gekennzeichnet,**
**daß** eine Steuerung (ST) vorgesehen ist, die nachdem die Leistung der Pumplaser (PL1, PL2, PL3) schnell eingestellt wurde, die Verkippung und/oder den Pegel der ungestörten Übertragungsbänder (λ_{R}) nachregelt.

20. Anordnung nach Anspruch 17, 18 oder 19,
**dadurch gekennzeichnet,**
**daß** eine Steuerung (ST) vorgesehen ist, die zusätzlich die Verstärkung und/oder Verkippung eines optischen Verstärkers (V, D, V) in einem Sendeteil (S) und/oder in einem Empfangsteil (R) einstellt.

## Claims

1. Method for adjusting the tilting of a broadband optical signal (OS_{E}) transmitted via an optical conductor, by feeding at least one pump signal into the optical conductor, **characterized in that** a pump signal (PS2) is fed in whose wavelength (λ_{L2}) is greater than the maximum wavelength (λ_{MA}) of the optical signal (OS_{E}) and whose wavelength and level are selected such that the optical signal (OS_{E}) has the desired tilting given a prescribed change in level.

2. Method according to Claim 1, **characterized in that** at least one further pump signal (PS3) is fed in whose wavelength (λ_{L3}) is likewise greater than the maximum wavelength (λ_{MA}) of the optical signal (OS_{E}).

3. Method for adjusting the tilting according to Claim 1, **characterized in that** a further pump signal (PS1) with a wavelength (λ_{L1}) less than the minimum wavelength (λ_{MI}) of the optical signal (OS_{E}) is fed in, and the at least two pump signals respectively have a different wavelength spacing from the mean wavelength of the optical signal (OS_{E}), and **in that** the wavelengths and levels of the pump signals (PS1, PS2) are selected such that the optical signal (OS_{E}) has the desired tilting.

4. Method for adjusting the tilting in the case of optical signal transmission via an optical conductor (LW), in the case of which a plurality of pump signals (PS1, PS2) are fed into the optical conductor (LW), **characterized in that** a plurality of transmission bands (λ_{B}, λ_{R}) are transmitted via the optical conductor, **in that** the signal level of the transmission bands (λ_{B}, λ_{R}) are measured, and **in that** in the event of a change in, in particular of a failure of, the signal level of at least one of the transmission bands (λ_{B}, λ_{R}), at least one pump signal (PS1) is fed into the optical conductor (LW) and its level is adjusted such that the tilting of the at least one undisturbed transmission band (λ_{R}) remains at least virtually constant at the receiving end.

5. Method according to Claim 4, **characterized in that** at least one further pump signal (PS2, PS3) with a different pump wavelength (λ_{L2}, λ_{L3}) is fed in.

6. Method according to Claim 5, **characterized in that** a first pump signal (PS1) with a wavelength (λ_{B}) less than the minimum wavelength (λ_{MI}) of the transmission bands (λ_{B}, λ_{R}) is fed in, and **in that** a second pump signal (PS2) with a wavelength (λ_{R}) greater than the maximum wavelength (λ_{MA}) of the transmission bands (λ_{B}, λ_{R}) is fed in.

7. Method according to Claim 4, **characterized in that** the pump wavelength (λ_{L1}, λ_{L2}) of a pump laser (PL1, PL2) used for compensating an absent transmission band corresponds approximately to the mean wavelength thereof.

8. Method according to one of the preceding Claims 4 to 7, **characterized in that** given absence of a transmission band (λ_{B}, λ_{R}), the levels of the pump signals (PS1, PS2, PS3) are adjusted very quickly on the basis of known required changes in power, and **in that**, if appropriate, a correction to the tilting and the signal level is performed.

9. Method according to one of Claims 4 to 8, **characterized in that** in each case the wavelength (λ_{L1}, λ_{L2}, λ_{L3}) and the level of the pump signal (PS) or the pump signals (PS1, PS2, PS3) is selected or adjusted such that the desired tilting occurs at least approximately given a desired level.

10. Method according to one of the preceding claims, **characterized in that** in the undisturbed operating case the tilting, at the receiving end, of the received optical signal (OS_{E}) or of the transmission bands (λ_{B}, λ_{R}) is minimized by regulating the pump signals (PS1, PS2, PS3).

11. Method according to one of Claims 3-9, **characterized in that** the level of the received optical signal (OS_{E}) or the transmission band ((λ_{B}, λ_{R}) is kept constant by controlling the pump signals (PS1, PS2).

12. Method according to Claims 1 to 11, **characterized in that** the pump signals (PS1, PS2) are fed in at the receiving end of a transmission section (S, LW, R).

13. Method according to Claims 3 to 12, **characterized in that** in each case at least one pump signal (PS1, PS2) is fed in at the transmitting end and the receiving end.

14. Method according to Claims 5 to 11, **characterized in that** in the case of bidirectional transmission pump signals (PS1, PS2) are fed in at both ends of the transmission section (S, LW, R).

15. Arrangement for adjusting the tilting and the level of a broadband optical signal (OS_{E}) transmitted via an optical conductor (LW), having at least two pump lasers (PL1, P12) which feed pump signals (PS1, PS2) into the optical conductor (LW), **characterized in that** a first pump signal (PS1) with a wavelength (λ_{L1}) less than the minimum wavelength (λ_{MI}) of the optical signal (OS) is fed in, **in that** a second pump signal (PS2) with a wavelength (λ_{L2}) greater than the maximum wavelength (λ_{MA}) of the optical signal (S) is fed in, which has a different wavelength spacing from the mean wavelength of the optical signal (OS) than the first pump signal (PS1), and **in that** the wavelengths and levels of the pump signals (PS1, PS2) are selected such that the optical signal (OS_{E}, λ_{B}, λ_{R}) has at least approximately the desired tilting and the desired level.

16. Arrangement for adjusting the tilting and the level in the case of optical signal transmission via an optical conductor (LW), having at least two pump lasers (PL1, P12) which feed pump signals (PS1, PS2) into the optical conductor (LW), **characterized in that** a controller (ST) is provided which measures the signal level of at least two transmission bands (λ_{B}, λ_{R}) and, in the event of a change in the signal level, in particular an absence, of at least one transmission band ((λ_{B}) adjusts the power of the pump signals (PS1, PS2) such that the tilting in the at least one undisturbed transmission band (λ_{R}) remains approximately constant at the receiving end.

17. Arrangement according to Claim 16, **characterized in that** pump lasers (PL1, PL2) are provided in the case of which the wavelengths of their pump signals (PS1, PS2) are selected, and their powers adjusted, such that the undisturbed transmission band (λ_{R}) has at least approximately the desired tilting and the desired level.

18. Arrangement according to Claim 16 or 17, **characterized in that** a controller (ST) is provided which in the event of an absence of a transmission band (λ_{B}) adjusts the power of the pump lasers (PL1, PL2, PL3) very quickly on the basis of known required changes in power.

19. Arrangement according to Claim 18, **characterized in that** a controller (ST) is provided which corrects the tilting and/or the level of the undisturbed transmission bands (λ_{R}) after the power of the pump lasers (PL1, PL2, PL3) has been quickly adjusted.

20. Arrangement according to Claim 17, 18 or 19, **characterized in that** a controller (ST) is provided which additionally adjusts the gain and/or tilting of an optical amplifier (V, D, V) in a transmitting part (S) and/or in a receiving part (R).

## Revendications

1. Procédé de réglage du basculement d'un signal optique (OS_{E}) à large bande transmis par le biais d'un guide d'ondes lumineuses par l'alimentation d'au moins un signal de pompe dans le guide d'ondes lumineuses, **caractérisé en ce qu'**on alimente un signal de pompe (PS2) dont la longueur d'onde (λ_{L2}) est supérieure à la longueur d'onde maximale (λ_{MA}) du signal optique (OS_{E}) et dont la longueur d'onde et le niveau sont choisis de manière à ce que le signal optique (OS_{E}) présente le basculement souhaité au moment d'un changement de niveau prédéfini.

2. Procédé selon la revendication 1, **caractérisé en ce qu'**on alimente au moins un autre signal de pompe (PS3) dont la longueur d'onde (λ_{L3}) est également supérieure à la longueur d'onde maximale (λ_{MA}) du signal optique (OS_{E}).

3. Procédé de réglage du basculement selon la revendication 1, **caractérisé en ce qu'**on alimente un autre signal de pompe (PS1) de longueur d'onde (λ_{L1}) inférieure à la longueur d'onde minimale (λ_{MI}) du signal optique (OS_{E}), et les au moins deux signaux de pompe présentent à chaque fois un écart différent entre leurs longueurs d'ondes et la longueur d'onde moyenne du signal optique (OS_{E}), et **en ce que** les longueurs d'ondes et les niveaux des signaux de pompe (PS1, PS2) sont choisis de manière à ce que le signal optique (OS_{E}) présente le basculement souhaité.

4. Procédé de réglage du basculement lors de la transmission de signaux optiques par le biais d'un guide d'ondes lumineuses (LW), dans lequel plusieurs signaux de pompe (PS1, PS2) sont alimentés dans le guide d'ondes lumineuses (LW), **caractérisé en ce que** plusieurs bandes de transmission (λ_{B}, λ_{R}) sont transmises par le biais du guide d'ondes lumineuses, **en ce que** les niveaux des signaux des bandes de transmission (λ_{B}, λ_{R}) sont mesurés, et **en ce que**, lors d'un changement - notamment en cas de défaillance - du niveau de signal d'au moins une des bandes de transmission (λ_{B}, λ_{R}), au moins un signal de pompe (PS1) est alimenté dans le guide d'ondes lumineuses (LW) et son niveau est ajusté de manière à ce que le basculement de la au moins une bande de transmission non perturbée (λ_{R}) reste au moins à peu près constant sur le côté de réception.

5. Procédé selon la revendication 4, **caractérisé en ce que** l'on alimente au moins un autre signal de pompe (PS2, PS3) ayant une longueur d'onde de pompe (λ_{L2}, λ_{L3}) différente.

6. Procédé selon la revendication 5, **caractérisé en ce que** l'on alimente un premier signal de pompe (PS1) de longueur d'onde (λ_{B}) inférieure à la longueur d'onde minimale (λ_{MI}) des bandes de transmission (λ_{B}, λ_{R}), et **en ce qu'**on alimente un second signal de pompe (PS2) de longueur d'onde (λ_{R}) supérieure à la longueur d'onde maximale (λ_{MA}) des bandes de transmission (λ_{B}, λ_{R}).

7. Procédé selon la revendication 4, **caractérisé en ce que** la longueur d'onde de pompe (λ_{L2}, λ_{L3}) d'un laser de pompe (PL1, PL2) utilisé pour compenser une bande de transmission défaillante correspond à peu près à la longueur d'onde moyenne de cette dernière.

8. Procédé selon l'une des revendications précédentes 4 à 7, **caractérisé en ce que**, en cas de défaillance d'une bande de transmission (λ_{B}, λ_{R}), les niveaux des signaux de pompe (PS1, PS2, PS3) sont ajustés très rapidement en raison des changements de puissance nécessaires connus, et **en ce qu'**on procède, le cas échéant, à un nouveau réglage du basculement et un nouvel ajustement du niveau de signal.

9. Procédé selon l'une des revendications 4 à 8, **caractérisé en ce que** la longueur d'onde (λ_{L1}, λ_{L2}, λ_{L3}) et le niveau du signal de pompe (PS) ou des signaux de pompe (PS1, PS2, PS3) sont choisis ou ajustés de manière à ce que le basculement souhaité se produise, au moins approximativement, pour un niveau souhaité.

10. Procédé selon l'une des revendications précédentes, **caractérisé en ce que**, lors du fonctionnement normal, on minimise le basculement, sur le côté de réception, du signal optique reçu (OS_{E}) ou des bandes de transmission (λ_{B}, λ_{R}) en ajustant les signaux de pompe (PS1, PS2, PS3).

11. Procédé selon l'une des revendications 3 à 9, **caractérisé en ce que** le niveau du signal optique reçu (OS_{E}) ou de la bande de transmission (λ_{B}, λ_{R}) est maintenu constant grâce à l'ajustement individuel des signaux de pompe (PS1, PS2).

12. Procédé selon les revendications 1 à 11, **caractérisé en ce que** les signaux de pompe (PS1, PS2) sont alimentés à l'extrémité d'un segment de transmission (S, LW, R) sur le côté de réception.

13. Procédé selon les revendications 3 à 12, **caractérisé en ce qu'**on alimente au moins un signal de pompe (PS1, PS2), à chaque fois, sur le côté d'émission et sur le côté de réception.

14. Procédé selon les revendications 5 à 11, **caractérisé en ce que**, lors d'une transmission bidirectionnelle, on alimente des signaux de pompe (PS1, PS2) aux deux extrémités d'un segment de transmission (S, LW, R).

15. Dispositif de réglage du basculement et d'ajustement du niveau d'un signal optique (OS_{E}) à large bande transmis par le biais d'un guide d'ondes lumineuses (LW), comprenant au moins deux lasers de pompe (PL1, PL2) qui alimentent des signaux de pompe (PS1, PS2) dans le guide d'ondes lumineuses (LW), **caractérisé en ce qu'**on alimente un premier signal de pompe (PS1) de longueur d'onde (λ_{L1}) inférieure à la longueur d'onde minimale (λ_{MI}) du signal optique (OS), **en ce qu'**on alimente un second signal de pompe (PS2) de longueur d'onde (λ_{L2}) supérieure à la longueur d'onde maximale (λ_{MA}) du signal optique (OS) et qui présente entre sa longueur d'onde et la longueur d'onde moyenne du signal optique (OS) un écart qui diffère de celui du premier signal de pompe (PS1), et **en ce que** les longueurs d'ondes et les niveaux des signaux de pompe (PS1, PS2) sont choisis de manière à ce que le signal optique (OS_{E}, λ_{B}, λ_{R}) présente, au moins approximativement, le basculement souhaité et le niveau souhaité.

16. Dispositif de réglage du basculement et d'ajustement du niveau lors de la transmission de signaux optiques par le biais d'un guide d'ondes lumineuses (LW), comprenant au moins deux lasers de pompe (PL1, PL2) qui alimentent des signaux de pompe (PS1, PS2) dans le guide d'ondes lumineuses (LW), **caractérisé en ce que** l'on prévoit une commande (ST) qui mesure les niveaux des signaux d'au moins deux bandes de transmission (λ_{B}, λ_{R}) et qui, en cas de changement du niveau de signal notamment en cas de défaillance d'au moins une bande de transmission (λ_{B}), règle la puissance des signaux de pompe (PS1, PS2) de manière à ce que le basculement dans la au moins une bande de transmission non perturbée (λ_{R}) reste au moins à peu près constant sur le côté de réception.

17. Dispositif selon la revendication 16, **caractérisé en ce que** l'on prévoit des lasers de pompe (PL1, PL2) dont les signaux de pompe (PS1, PS2) ont des longueurs d'ondes qui sont choisies et dont les puissances sont réglées de manière à ce que la bande de transmission non perturbée (λ_{R}) présente, au moins approximativement, le basculement souhaité et le niveau souhaité.

18. Dispositif selon la revendication 16 ou 17, **caractérisé en ce que** l'on prévoit une commande (ST) qui, en cas de défaillance d'une bande de transmission (λ_{B}), règle très rapidement la puissance des lasers de pompe (PL1, PL2, PL3) en raison des changements de puissance nécessaires connus.

19. Dispositif selon la revendication 18, **caractérisé en ce que** l'on prévoit une commande (ST) qui, après avoir réglé rapidement la puissance des lasers de pompe (PL1, PL2, PL3), procède à un nouveau réglage du basculement et/ou un nouvel ajustement du niveau des bandes de transmission non perturbées (λ_{R}).

20. Dispositif selon la revendication 17, 18 ou 19, **caractérisé en ce que** l'on prévoit une commande (ST) qui, en plus, règle l'amplification et/ou le basculement d'un amplificateur optique (V, D, V) dans une partie d'émission (S) et/ou dans une partie de réception (R).
